(19) Europäisches Patentamt
European Patent Office
Office européen des brevets

(11) Publication number: **0 194 872 B1**

## EUROPEAN PATENT SPECIFICATION

(45) Date of publication of patent specification: **16.10.91**     (51) Int. Cl.⁵: **C09K 3/10**

(21) Application number: **86301773.7**

(22) Date of filing: **12.03.86**

(54) Sealing material.

(30) Priority: **12.03.85 US 711119**

(43) Date of publication of application:
**17.09.86 Bulletin 86/38**

(45) Publication of the grant of the patent:
**16.10.91 Bulletin 91/42**

(84) Designated Contracting States:
**AT BE CH DE FR GB IT LI NL SE**

(56) References cited:
**EP-A- 0 108 518**
**DE-C- 2 918 254**
**FR-A- 2 404 039**
**US-A- 4 356 676**

(73) Proprietor: **RAYCHEM CORPORATION (a Delaware corporation)**
**300 Constitution Drive**
**Menlo Park, California 94025(US)**

(72) Inventor: **Dubrow, Robert S.**
**334 Roble Avenue**
**Redwood City California 94061(US)**

(74) Representative: **Benson, John Everett et al**
**Raychem Limited Intellectual Property Law**
**Department Faraday Road Dorcan**
**Swindon, Wiltshire SN3 5HH(GB)**

## Description

This invention relates to sealant material having a cone penetration from about 100 to 350 ($10^{-1}$ mm), as determined by the standard ASTM test D217-68, and having an ultimate elongation of at least 50% as determined by standard ASTM test D638-80. Elastomeric sealants of these properties generally have very tacky surfaces and very low mechanical strength which makes these sealants difficult to handle and apply to substrates where a seal is desired. These elastomeric sealants have been used in various containers such as caps and crimp connectors in order to provide environmental seals on electrical connections and other substrates, as disclosed in GB-A-2133026, and EP-A-108518.

These elastomeric sealants have also been cast into a foam-like structure in order to give the elastomeric sealant certain mechanical strengths and handling qualities, as disclosed in EP-A-108518. When the elastomeric sealant is cast into such a foam structure, it may be made in the form of a tape which can be applied on or around a substrate from a release paper to accomplish the desired environmental seal. Due to the surface tack of the elastomeric sealant, it is desired to have a permanent backing on one side of the elastomeric sealant to provide a tack-free finish when the sealant is applied on or around a substrate. It is also desirable to be able to remove the sealant from the substrate, have the sealant remain intact and reapply the sealant to the substrate.

Due to the various properties of these elastomeric sealants, including their softness, flexibility, elongation and, in many cases, the oil content, typical backing or support materials are not suitable for use with these elastomeric sealants. Therefore, it is an object of this invention to provide in combination an elastomeric sealant and a support material which are bonded together with a sufficient strength and permanence to provide a useful sealing material which can be applied to or around a substrate, can provide a tack-free surface after the elastomeric sealant is applied, can provide mechanical protection for the elastomeric sealant and can provide means for removing the elastomeric sealant from the substrate without substantial damage to the elastomeric sealant and reapplying the sealant to the substrate.

In one aspect, this invention provides a sealing material comprising in combination:

a. an elastomeric sealant having a cone penetration from about 100-350 ($10^{-1}$mm) and an ultimate elongation of at least 50%; and

b. a support material in contact with a surface of the elastomeric sealant and comprising a porous polymeric material wherein the porosity of the polymeric material is sufficient to allow bonding of the elastomeric sealant to the support material on simple physical contact therebetween with a bond strength which is greater than the cohesive strength of the elastomeric sealant or the cohesive strength of the support material.

The sealing material of this invention has the sealant bonded to the support material such that either the sealant or the support material will fail cohesively before the bond between the sealant and the support material will fail. It is important to note that the sealant-to-support bond need not be stronger than both the cohesive strength of the sealant and the cohesive strength of the support material, but only stronger than one or the other. The sealant-to-support bond may be greater than the cohesive strength of the sealant and greater than the cohesive strength of the support material, which will necessarily be the case where the cohesive strengths of the sealant and the support material are about equal.

In another aspect, this invention provides a method of forming a sealing material which comprises placing a porous polymeric support material in contact with an elastomeric sealant having a cone penetration of about 100-350 ($10^{-1}$mm) wherein the porous support material has a porosity sufficient to allow bonding of the elastomeric sealant to the support material on simple physical contact therebetween with a bond strength which is greater than the cohesive strength of either the elastomeric sealant or the support material and maintaining said contact for a period of time sufficient to allow the elastomeric sealant so to bond to the porous support material.

In another aspect, this invention provides a method of protecting a substrate by applying to a substrate a sealing material comprising in combination:

a. an elastomeric sealant having a cone penetration from about 100-350 ($10^{-1}$mm) and an ultimate elongation of at least 50%; and

b. a support material in contact with a surface of the elastomeric sealant and comprising a porous polymeric material wherein the porosity of the polymeric material is sufficient to allow bonding of the elastomeric sealant to the support material on simple physical contact therebetween with a bond strength which is greater than the cohesive strength of the elastomeric sealant or the cohesive strength of the support material.

The elastomeric sealant useful in the invention has a cone penetration of about 100-350 ($10^{-1}$mm) and elongation of at least 50%, as determined by the ASTM tests noted above. For many uses, a preferred sealant may have a cone penetration of about 115-325 ($10^{-1}$mm) and may be about 120-300 ($10^{-1}$mm). The elongation of the sealant material may be at least about 100% or at least about 150%. In addition, many of the elastomeric sealants useful in this invention have other properties that make them useful as environmental sealants, particularly against moisture. These properties include high surface tackiness, which enhances its ability to seal effectively against the surface of a substrate, and elastic modulus, which allows the elastomeric sealant to deform over irregular shapes and maintain a good seal with the surface of the substrate. These properties may also provide the characteristic of these elastomeric sealants of having a capability of being removed from the surface of the substrate and replaced on the surface of the substrate a substantial number of times without a significant damage to the sealant or significant decrease in the effectiveness of the sealing and protection of the substrate by the sealant when reapplied to the substrate.

The elastomeric sealants useful in this invention include polysiloxanes, polyurethanes, polybutyls, triblock copolymers and the like. The polysiloxane sealants useful in this invention typically have about 20 to 80% by weight crosslinked polysiloxane and about 80-20% by weight uncrosslinked polysiloxane oil. These polysiloxane sealants are prepared by crosslinking polysiloxane liquids to the desired degree by conventional methods to produce the sealant properties outlined above. Examples of such polysiloxane liquids and their crosslinking are illustrated in U.S. patents 4,163,082; 4,064,027; 3,179,546 and 3,065,158. An example of such material is MTV Silicone Gel V-120 (Trade Mark), available from SWS Silicones Corporation.

The polyurethanes useful in this invention may contain from 20-80% crosslinked polyurethane and 20 to 80% oil, such as a mineral oil. Examples of the polyurethane elastomeric sealant materials are described in EP-A-108518.

Examples of polybutylene materials useful in this invention are described in European patent application number 85306157.0.

Examples of triblock copolymer materials useful in this invention are described in U.S. patent 4,369,284. Other polymeric materials having the desired cone penetration, elongation and other properties are also useful in this invention.

The support material useful in this invention is a porous polymeric material which may be in the form of a flexible sheet, film or tape. Examples of the polymeric materials include polytetraflouroethylene, polypropylene, polyethylene, and the like. The polymeric support material must have a porosity sufficient for the elastomeric sealant to bond to the support material with a bond strength greater than the cohesive strength of the elastomeric sealant or greater than the cohesive strength of the support material. Other examples of such polymeric support materials include polyvinyldine fluoride, celluose acetate and polysulfone.

The elastomeric sealants useful in this invention in general have adhesion strength to polymeric materials only equal to the surface tack or peel strength of the elastomeric sealant. However, it has unexpectedly been discovered that when the polymeric material is of a porous nature, such as an unsintered polytetrafluoroethylene tape, the elastomeric sealant quickly bonds upon simple physical contact with the polymeric material to produce a resulting bond strength greater than either the cohesive strength of the elastomeric sealant or greater than the cohesive strength of the polymeric material.

The mechanism of the bonding of the elastomeric sealant to the porous polymeric support material is unknown. However, it is believed that the crosslinked portion of the elastomeric sealant migrates to some extent into the pores of the porous polymeric material to provide the strong bond. This phenomenon of strong bonding has been observed with the elastomeric sealant on unsintered polytetrafluoroethylene having a density in the range of 1.7, whereas on sintered polytetrafluoroethylene having a density in the range of 2.2 the strong bonding did not occur. Similarly, strong bonding has been observed on polypropylene having a void volume in the range of 45%, whereas on polypropylene having essentially no void volume the strong bonding did not occur. In addition, the strong bonding did not occur when the liquid sealant was cast on the unsintered polytetrafluoroethylene and cured or crosslinked in place to the desired elastomeric sealant properties.

The method of this invention comprises placing a surface of an elastomeric sealant having a cone penetration from about 100-350 ($10^{-1}$mm) and an ultimate elongation of at least 50% in physical contact with the porous polymeric support material. Within a few minutes the elastomeric sealant is bonded to the porous polymeric support material. This bonding appears to be relatively independent of the pressure of the contact or temperature of the materials. The time necessary to achieve the bonding is relatively short, in some cases seconds, but in some cases about 15 to 30 minutes is required for full bonding strength. It has also been observed that the longer times are required for elastomeric sealants having higher cone penetration values.

The sealing material of this invention can be used for any conventional surface protection by applying the elastomeric sealant to the surface to be protected with the polymeric support material providing mechanical application means and protection for the elastomeric sealant. The sealing material of this invention can be applied as sheets, tapes and in other forms to provide environmental protection for the substrate.

The invention can be illustrated by the following examples.

Example 1

Polydimethylsiloxane, polybutylene and polyurethane sealants were formulated to have cone penetration values between 100 and 300 ($10^{-1}$mm). Strips of unsintered polytetrafluoroethylene tape (3M Brand, #48 tape Trade Mark) were placed on the sealants. After 30 minutes the tape was pulled from the sealant and it was noted whether the failure was adhesive or cohesive. In the event of a cohesive failure, it was recorded if the tape broke or the sealant tore. The results are presented in the following table.

Unsintered Polytetrafluoroethylene/Seleant Bondline Failure Modes

| SEALANT TYPE | CONE PENETRATION OF SEALANT ($10^{-1}$mm) | FAILURE MODE |
|---|---|---|
| urethane | 114 | adhesive |
| urethane | 148 | cohesive (support) |
| urethane | 176 | cohesive (support) |
| urethane | 223 | cohesive (sealant) |
| urethane | 262 | cohesive (sealant) |
| silicone | 99 | adhesive |
| silicone | 156 | cohesive (support) |
| silicone | 262 | cohesive (sealant) |
| butyl | 74 | adhesive |
| butyl | 129 | cohesive (support) |
| butyl | 260 | cohesive (sealant) |

Example 2

Polydimethylsiloxane, polybutylene and polyurethane sealants were formulated to have cone penetration values between 100 and 300 ($10^{-1}$mm). Strips of porous polypropylene (Celanese, Celguard 2500 Trade Mark) having a void volume of 45% were placed on the sealants. After 30 minutes the strips were pulled from the sealant and it was noted whether the failure was adhesive or cohesive. In the event of a cohesive failure, it was recorded if the tape broke or the sealant tore. The results are present in the following table.

Porous Polypropylene/Sealant Bondline Failure Modes

| SEALANT TYPE | CONE PENETRATION OF SEALANT ($10^{-1}$mm) | FAILURE MODE |
|---|---|---|
| urethane | 114 | adhesive |
| urethane | 148 | cohesive (tape) |
| urethane | 176 | cohesive (tape) |
| urethane | 223 | cohesive (sealant) |
| urethane | 262 | cohesive (sealant) |
| silicone | 99 | adhesive |
| silicone | 156 | cohesive (tape) |
| silicone | 262 | cohesive (sealant) |
| butyl | 74 | adhesive |
| butyl | 129 | cohesive (tape) |
| butyl | 260 | cohesive (sealant) |
| butyl | 305 | cohesive (sealant) |

Example 3

Urethane and silicone sealants having cone penetration of 262 ($10^{-1}$mm) were tested for their peel strength on porous and non-porous polymeric support of the same chemical type. Sealant layers of 0.10 inch thickness were laminated between two sheets of porous, unsintered polytetrafluoroethylene (3M Brand #48, Trade Mark), sintered polytetrafluoroethylene (Chemplast, PTFE, Trade Mark), porous polypropylene (Celenese Celguard 2500, Trade Mark) and compression molded polypropylene (Profax 6523, Trade Mark). One inch strips were cut from the sealant-sheet laminates and pulled in a peel mode on an Instron mechanical testing machine at 2 inches per minutes. Peel strengths were determined in pounds per linear inch and are recorded in the following table. The results indicate the increase in peel strength and bond strength associated with porosity.

Peel Strengths of Sealants on Porous vs. Non-Porous Substrates

| POLYMERIC SUP-PORT MATERIAL | SEALANT TYPE | PEEL STRENGTH (lb./in.) (0.45 kg/2.54 cm) |
|---|---|---|
| Unsintered PTFE | Urethane | 0.90 |
| Unsintered PTFE | Silicone | 0.45 |
| Sintered PTFE | Urethane | 0.05 |
| Sintered PTFE | Silicone | 0.02 |
| Porous PP | Urethane | 1.10 |
| Porous PP | Silicone | 0.44 |
| Molded PP | Urethane | 0.04 |
| Molded PP | Silicone | 0.02 |

Claims

1. A sealing material comprising in combination:
   a) an elastomeric sealant having a cone penetration from about 100-350 ($10^{-1}$mm) and an ultimate elongation of at least 50%; and
   b) a support material in contact with a surface of the elastomeric sealant and comprising a porous polymeric material wherein the porosity of the polymeric material is sufficient to allow bonding of the elastomeric sealant to the support material on simple physical contact therebetween with a bond strength which is greater than the cohesive strength of the elastomeric sealant or the cohesive strength of the support material.

2. A sealing material according to claim 1, wherein the elastomeric sealant comprises a polysiloxane or polyurethane.

3. A sealing material according to claim 1 or claim 2, wherein the support material comprises polytetrafluoroethylene or polypropylene.

4. A method of forming a sealing material which comprises placing a porous polymeric support material in contact with an elastomeric sealant having a cone penetration of about 100-350 ($10^{-1}$mm) wherein the porous support material has a porosity sufficient to allow bonding of the elastomeric sealant to the support material on simple physical contact therebetween with a bond strength which is greater than the cohesive strength of either the elastomeric sealant or the support material and maintaining said contact for a period of time sufficient to allow the elastomeric sealant so to bond to the porous support material.

5. A method of protecting a substrate by applying to a substrate a sealing material comprising in combination:
   a) an elastomeric sealant having a cone penetration from about 100-350 ($10^{-1}$mm) and an ultimate elongation of at least 50%; and
   b) a support material in contact with a surface of the elastomeric sealant and comprising a porous polymeric material wherein the porosity of the polymeric material is sufficient to allow bonding of the elastomeric sealant to the support material on simple physical contact therebetween with a bond strength which is greater than the cohesive strength of the elastomeric sealant or the cohesive strength of the support material.

**Revendications**

1. Matière d'étanchéité comprenant, en association :
   a) un agent élastomère d'étanchéité ayant une pénétration du cône d'environ 100 à 350 ($10^{-1}$ mm) et un allongement à la rupture d'au moins 50 % ; et
   b) une matière de support en contact avec une surface de l'agent élastomère d'étanchéité et comprenant une matière polymérique poreuse, la porosité de la matière polymérique étant suffisante pour permettre la liaison de l'agent élastomère d'étanchéité à la matière de support par un simple contact physique entre cet agent élastomère d'étanchéité et cette matière de support avec une résistance de liaison qui est supérieure à la résistance cohésive de l'agent élastomère d'étanchéité ou à la résistance cohésive de la matière de support.

2. Matière d'étanchéité suivant la revendication 1, dans laquelle l'agent élastomère d'étanchéité comprend un polysiloxane ou un polyuréthanne.

3. Matière d'étanchéité suivant la revendication 1 ou la revendication 2, dans laquelle la matière de support comprend un polytétrafluoréthylène ou un polypropylène.

4. Procédé pour former une matière d'étanchéité, qui consiste à placer une matière polymérique poreuse de support en contact avec un agent élastomère d'étanchéité ayant une pénétration du cône d'environ 100 à 350 ($10^{-1}$ mm), la matière poreuse de support ayant une porosité suffisante pour permettre la liaison de l'agent élastomère d'étanchéité à la matière de support par un simple contact physique entre cet agent élastomère d'étanchéité et cette matière de support avec une résistance de liaison qui est supérieure à la résistance cohésive de l'agent élastomère d'étanchéité ou de la matière de support, et à maintenir ledit contact pendant un temps suffisant pour permettre la liaison de l'agent élastomère d'étanchéité à la matière poreuse de support.

5. Procédé de protection d'un substrat par application à un substrat d'une matière d'étanchéité comprenant en association :
   a) un agent élastomère d'étanchéité ayant une pénétration du cône d'environ 100 à 350 ($10^{-1}$ mm) et un allongement à la rupture d'au moins 50 % ; et
   b) une matière de support en contact avec une surface de l'agent élastomère d'étanchéité et comprenant une matière polymérique poreuse, la porosité de la matière polymérique étant suffisante pour permettre la liaison de l'agent élastomère d'étanchéité à la matière de support par un simple contact physique entre cet agent élastomère d'étanchéité et cette matière de support avec une résistance de liaison qui est supérieure à la résistance cohésive de l'agent élastomère d'étanchéité ou à la résistance cohésive de la matière de support.

**Patentansprüche**

1. Abdichtmaterial, das in Kombination umfaßt:
   a) ein elastomeres Abdichtmaterial mit einer Kegeldruckhärte von ca. 100-350 ($10^{-1}$ mm) und einer Dehnung beim Reißen von wenigstens 50 %; und
   b) ein mit einer Oberfläche des elastomeren Abdichtmaterials in Kontakt befindliches Trägermaterial, umfassend ein poröses Polymermaterial, wobei die Porosität des Polymermaterials ausreicht, um eine Klebverbindung des elastomeren Abdichtmaterials mit dem Trägermaterial bei einfachem physischem Kontakt zwischen beiden mit einer Haftfestigkeit zu erlauben, die größer als die Kohäsionskraft des elastomeren Abdichtmaterials oder die Kohäsionskraft des Trägermaterials ist.

2. Abdichtmaterial nach Anspruch 1,
   dadurch gekennzeichnet, daß
   das elastomere Abdichtmaterial ein Polysiloxan oder Polyurethan umfaßt.

3. Abdichtmaterial nach Anspruch 1 oder 2,
   dadurch gekennzeichnet, daß
   das Trägermaterial Polytetrafluorethylen oder Polypropylen umfaßt.

4. Verfahren zur Bildung eines Abdichtmaterials,

7

gekennzeichnet durch die folgenden Schritte:

Anordnen eines porösen polymeren Trägermaterials in Kontakt mit einem elastomeren Abdichtmaterial mit einer Kegeldruckhärte von ca. 100-350 ($10^{-1}$ mm), wobei das poröse Trägermaterial eine ausreichende Porosität hat, um eine Klebverbindung des elastomeren Abdichtmaterials mit dem Trägermaterial bei einfachem physischem Kontakt zwischen beiden mit einer Klebverbindungsfestigkeit zu erlauben, die größer als die Kohäsionskraft des elastomeren Abdichtmaterials oder des Trägermaterials ist, und Aufrechterhalten dieses Kontakts über einen Zeitraum, der ausreicht, um ein Klebverbinden des elastomeren Abdichtmaterials mit dem porösen Trägermaterial zu erlauben.

5. Verfahren zum Schutz eines Substrats durch Aufbringen einer Abdichtung auf das Substrat, wobei die Abdichtung in Kombination umfaßt:

a) ein elastomeres Abdichtmaterial mit einer Kegeldruckhärte von ca. 100-350 ($10^{-1}$ mm) und einer Dehnung beim Reißen von wenigstens 50 %; und

b) ein mit einer Oberfläche des elastomeren Abdichtmaterials in Kontakt befindliches Trägermaterial, umfassend ein poröses Polymermaterial, wobei die Porosität des Polymermaterials ausreicht, um eine Klebverbindung des elastomeren Abdichtmaterials mit dem Trägermaterial bei einfachem physischem Kontakt zwischen beiden mit einer Haftfestigkeit zu erlauben, die größer als die Kohäsionskraft des elastomeren Abdichtmaterials oder die Kohäsionskraft des Trägermaterials ist.